# FASCICULE DE BREVET EUROPEEN

(11) **EP 4 260 040 B1**
(45) Date de publication et mention de la délivrance du brevet: **16.10.2024**
(21) Numéro de dépôt: 21830718.9
(22) Date de dépôt: 30.11.2021
(51) Int. Cl.: G01M 15/14, G01L 15/00

(54) **PEIGNE D'INSTRUMENTATION POUR MOTEUR D'AERONEF A CAPTEURS ET ELECTRONIQUE INTEGRES**
INSTRUMENTENKAMM FÜR EIN FLUGZEUGTRIEBWERK MIT SENSOREN UND INTEGRIERTEM ELEKTRONISCHEM SYSTEM
INSTRUMENTATION COMB FOR AN AIRCRAFT ENGINE WITH SENSORS AND INTEGRATED ELECTRONIC SYSTEM

(30) Priorité: 08.12.2020 FR 2012872
(43) Date de publication de la demande: 18.10.2023
(73) Titulaire: SAFRAN, 75015 Paris (FR)
(72) Inventeur: D'ALMEIDA, Oscar, 77550 Moissy-Cramayel (FR); GHODHBANE MASMOUDI, Raouia, 77550 Moissy-Cramayel (FR); JANFAOUI, Sabri, 77550 Moissy-Cramayel (FR); THOMAS, Patrick, 77550 Moissy-Cramayel (FR)
(74) Mandataire: Cabinet Beau de Loménie
(86) Numéro de dépôt international: PCT/FR2021/052145
(87) Numéro de publication internationale: WO 2022/123143

(56) Documents cités:
- US-A1- 2012 324 988
- US-A1- 2019 323 909

## Description

### Domaine Technique

La présente invention se rapporte au domaine de l'aéronautique et concerne plus particulièrement l'instrumentation des moteurs d'aéronef pour les mesures d'essais, de maintenance ou encore de certification d'un équipement, au sol ou en vol, dans le but de comparer le comportement réel de cet équipement avec son modèle, d'obtenir des valeurs expérimentales supplémentaires, de suivre son état et ses paramètres limites.

### Technique antérieure

Il est connu pour la mesure des flux d'éjection des moteurs d'utiliser des « peignes » de mesure chargés de collecter des mesures, notamment des mesures comme les pressions et températures (P&T) des gaz à différents étages du moteur et constitués d'un tube central sur lequel sont percés un nombre prédéfini de trous régulièrement espacés. Au bout de ce collecteur tubulaire, une embase permet de fixer le peigne sur le carter du moteur, et de faire sortir les câbles des différents capteurs vers un banc d'essai comportant des appareils de mesure.

Toutefois, lorsque de très nombreux points de mesures doivent être relevés en simultané, ce qui est le cas des bancs de mesure de moteurs d'aéronef, la complexité du placement et du raccordement des capteurs de mesure au banc d'essai ou de mesure entraîne un problème de mise en oeuvre, notamment pour le passage des câbles, et de disponibilité, le taux de défaillance étant difficilement maitrisable avec un grand nombre de points à traiter, surtout lorsque la défaillance apparait après assemblage des pièces moteurs. En effet, la plupart des difficultés rencontrées découlent principalement de la topologie point-à-point utilisée consistant à associer un capteur analogique par ligne et par voie d'acquisition et qui nécessite donc un très grand nombre de câbles de liaison (en général, il y a 2 ou 4 fils (selon le type de capteur) par capteur). En outre, le collecteur tubulaire et sa liaison au banc d'essai n'est pas sans créer des pertes en cas par exemple de mesure de pression.

Les documents US 2019/323909 A1 et US 2012/324988 A1 divulguent des exemples de peigne d'instrumentation pour moteur d'aéronef.

### Exposé de l'invention

La présente invention a donc pour objet un peigne d'instrumentation de moteur d'aéronef palliant les inconvénients précités. Un but de l'invention est aussi de s'affranchir de l'environnement sévère (haute température et bruits) dans lequel est effectuée l'instrumentation des moteurs d'aéronef.

Ces buts sont atteints par un peigne d'instrumentation pour moteur d'aéronef comportant un tube central d'axe longitudinal sur lequel sont percés un nombre déterminé d'orifices espacés selon cet axe longitudinal et une embase formant une extrémité proximale de ce tube et destinée à être fixée sur une partie de carter du moteur d'aéronef, chaque orifice étant associé à une sonde mécanique de mesure d'un paramètre physique du moteur d'aéronef, chaque sonde mécanique étant associée à une interface électronique de traitement et l'embase intégrant une unité de traitement esclave reliée à chacune des interfaces électroniques de traitement par une liaison de communication numérique apte à recevoir en temps réel des données numériques de mesures correspondant aux paramètres physiques mesurés par les capteurs de mesure et destinées à être communiquées à une unité de traitement maitre par une liaison de communication unique, caractérisé en ce que les sondes mécaniques et leur interface électronique de traitement sont disposés sur le tube central et espacés les unes des autres suivant l'axe longitudinal du tube central.

Ainsi en intégrant dans le peigne d'instrumentation pour chacun des capteurs de mesure la sonde mécanique et une électronique de traitement analogique-numérique, on limite le nombre de câbles connectés au banc d'essai et on s'affranchit des perturbations affectant habituellement ces câbles.

De préférence, le paramètre physique est l'un quelconque ou une association des paramètres suivants : une pression, une température, un taux d'humidité, une composition de gaz.

Avantageusement, la liaison de communication unique est une liaison filaire ou sans fil, par exemple la liaison filaire est de type Ethernet ou RS485 et la liaison sans fil de type LoRa ou WiFi.

De préférence, l'unité de traitement esclave comporte un module de gestion d'alimentation adapté pour assurer l'alimentation en énergie des interfaces électroniques de traitement et d'un module de communication supportant la liaison de communication unique.

L'invention concerne aussi un réseau de peignes formé de plusieurs peignes d'instrumentation et dans lequel les peignes d'instrumentation sont répartis régulièrement sur la circonférence et sur plusieurs plans du moteur d'aéronef.

De préférence, les unités de traitement esclaves des peignes d'instrumentation d'un même plan sont reliées entre elles une à une pour former un cercle, la liaison de communication unique avec l'unité de traitement maître s'effectuant depuis au plus une unité de traitement déterminée d'un peigne d'instrumentation de chaque plan du réseau de peignes.

Avantageusement, une unité de traitement esclave d'un peigne d'instrumentation déterminé d'un plan donné est reliée à une unité de traitement esclave d'un peigne d'instrumentation déterminé d'un autre plan.

L'invention se rapporte aussi à un système de collecte de mesures d'un paramètre physique d'un moteur d'aéronef comprenant : au moins un peigne d'instrumentation tel que précité ; une unité de traitement maître reliée par une liaison de communication à un banc d'essai ; ladite unité de traitement maître étant reliée à l'unité de traitement esclave dudit peigne par une liaison de communication unique destinée à alimenter en énergie ladite unité de traitement esclave et à transférer les données issues des interfaces électroniques de traitement.

L'invention concerne également un moteur d'aéronef comportant au moins un peigne ou un réseau de peignes d'instrumentation tel que précité ainsi qu'un aéronef comportant ce moteur.

### Brève description des dessins

[Fig. 1] la figure 1 illustre une architecture conventionnelle de moteur d'aéronef comportant un peigne d'instrumentation conforme à l'invention,
[Fig. 2] la figure 2 montre un exemple d'un peigne d'instrumentation à huit capteurs relié par une liaison filaire unique à un banc d'essai moteur,
[Fig. 3] la figure 3 montre un exemple d'un réseau de peignes d'instrumentation relié par liaison filaire à un banc d'essai moteur, et
[Fig. 4] la figure 4 montre un exemple d'un réseau de peignes d'instrumentation relié par liaison sans fil à un banc d'essai moteur.

### Description des modes de réalisation

Le principe de l'invention repose sur l'intégration de capteurs de mesure dans des peignes d'instrumentation qui sont reliés à un module de contrôle par l'intermédiaire d'un câblage réduit de manière à pouvoir lire et transmettre en temps réel, afin de permettre d'opérer la turbomachine de manière réactive, les données des capteurs de mesure et/ou commander leur fonctionnement.

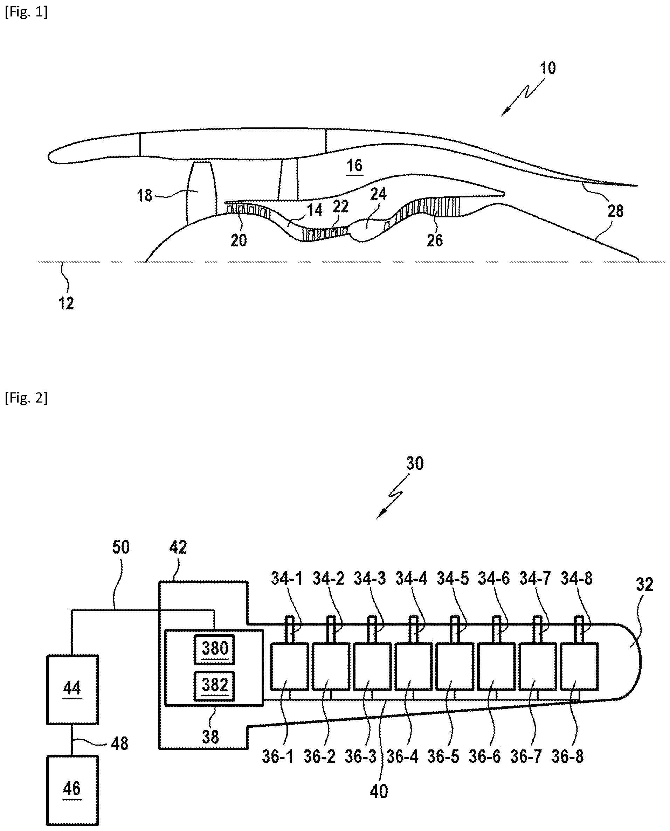

A titre d'exemple, la figure 1 montre une vue schématique en demi-coupe axiale d'une turbomachine pour aéronef 10 d'axe longitudinal 12, en particulier une turbomachine double corps double flux, sur laquelle peuvent être montés un ou plusieurs peignes d'instrumentation selon l'invention. Bien entendu, l'invention n'est pas limitée à ce type de turbomachine double corps double flux et elle pourrait par exemple s'appliquer à un simple corps, un triple corps, un turboréacteur à soufflante carénée à très fort taux de dilution, à un turbopropulseur (avec hélice non carénée), ou à une architecture de type à rotor ouvert (open rotor).

Classiquement une telle turbomachine comporte une veine primaire 14 parcourue par un flux chaud qu'entoure une veine secondaire 16 parcourue par un flux froid et elle comprend d'amont en aval par rapport à la direction des gaz d'éjection : une soufflante 18, un compresseur basse pression 20, un compresseur haute pression 22, une chambre de combustion annulaire 24, un ensemble de turbines haute et basse pression 26 et une tuyère d'éjection 28. Dans l'exemple illustré, chacun des compresseurs axiaux est muni, dans un carter annulaire, de roues à aubes mobiles et de redresseurs à aubes fixes disposés alternativement en une succession d'étages de compression adjacents.

La figure 2 montre un exemple de peigne à huit orifices pour instrumenter un moteur en pression et température. Ce peigne 30 comporte d'une part sur un tube central 32 d'axe longitudinal, associé à chaque orifice 34-1 à 34-8 percé dans ce tube et disposé, de préférence régulièrement, selon son axe longitudinal, un capteur de mesure 36-1 à 36-8 assurant par exemple comme illustré la mesure de la pression et de la température (P&T) du gaz impactant ces orifices et formé classiquement d'une sonde mécanique et de son interface électronique de traitement (adaptation et conversion analogique/numérique). D'autre part, le peigne 30 comporte une unité de traitement esclave 38 reliée électroniquement à chacun de ces capteurs de mesure par une liaison de communication 40, de préférence une liaison de type série synchrone, plus particulièrement un bus SPI (pour « serial peripheral interface »), ou toutes autres liaisons équivalentes, comme un bus SMB (pour « system management bus ») ou I²C. Ladite unité de traitement esclave 38 est intégrée à une embase 42 formant une extrémité proximale du tube central 32 et destinée à être fixée sur une partie de carter (non représentée) du moteur d'aéronef.

Cette liaison de communication 40 permet de garantir une transmission en temps réel des valeurs de mesure des capteurs de mesure afin de permettre d'opérer la turbomachine de manière réactive. Bien entendu, l'homme du métier saura déterminer et ajuster la fréquence d'échantillonnage nécessaire suivant le type et le nombre de mesures effectuées par peigne d'instrumentation. Les valeurs de mesures acquises par les capteurs sous forme analogique sont directement converties au niveau des capteurs, par son interface électronique de traitement, sous forme de données numériques et sont ensuite transmises à l'unité de traitement esclave 38 via la liaison de communication numérique 40. Cette numérisation se fait donc au plus proche du point de mesure, pour limiter les perturbations analogiques existant dans un environnement sévère comme celui d'un moteur d'aéronef et dues, par exemple, aux hautes températures ou aux bruits.

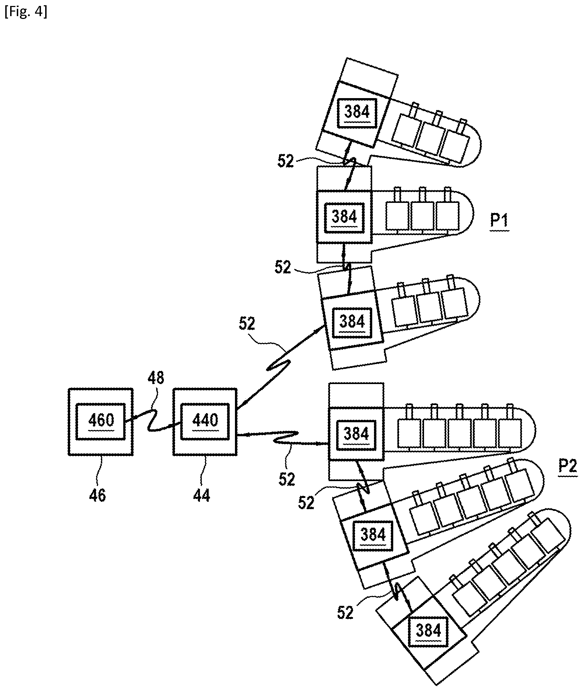

L'unité de traitement esclave 38 est également reliée, via un module de communication 380, avantageusement interne, à une unité de traitement maître 44. Cette unité de traitement maître 44 est de préférence distante de l'unité de traitement esclave 38 et elle peut être intégrée à un banc d'essai 46 ou, de manière avantageuse, déportée du banc d'essai 46 via une liaison de communication 48 pouvant être filaire, avantageusement par câblage Ethernet ou RS485, ou sans fil (comme illustré plus avant figure 4).

L'unité de traitement maître 44 reçoit les données numériques issues de la collecte des mesures de capteurs et envoyées par le module de communication 380 sur une liaison de communication unique 50, de préférence filaire, à travers un nombre de fils réduit, avantageusement 4 fils, de préférence 2 fils. Cette liaison de communication unique 50 relie l'unité de traitement esclave 38 à l'unité de traitement maître 44 et permet à la fois de transférer les données issues des capteurs et de fournir l'énergie nécessaire à l'unité de traitement esclave 38, plus précisément à un module de gestion d'alimentation 382 de cette unité qui assure sa propre alimentation en énergie ainsi que l'alimentation en énergie du module de communication 380 et des capteurs de mesure 36-1 à 36-8 via la liaison de communication numérique 40. Ainsi, le nombre de câbles existant habituellement entre les capteurs de mesure et le banc d'essai est notablement réduit.

Dans un mode de réalisation alternatif, la liaison de communication unique 50 est une communication de type sans fil (avantageusement selon le protocole LoRa (pour « Long Range ») ou WiFi supporté par le module de communication 380).

Les deux modes de réalisation précédents sont valables pour des applications au sol comme en vol.

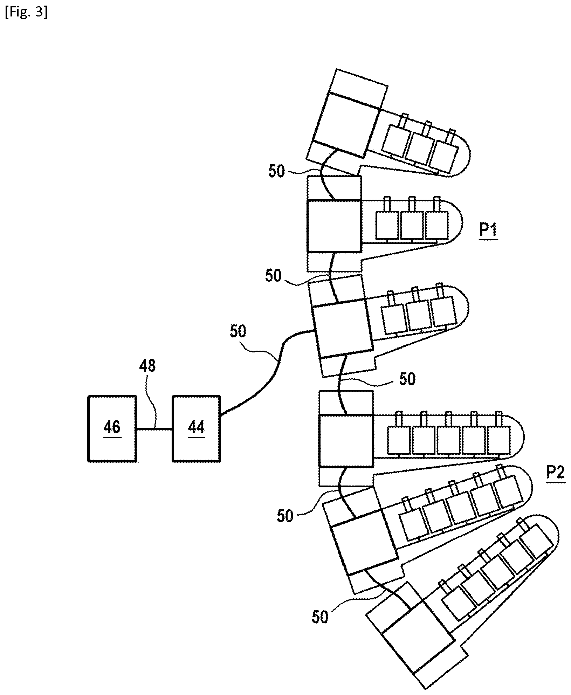

Les figures 3 et 4 illustrent une configuration de l'invention dans laquelle un moteur d'aéronef est instrumenté par une pluralité de peignes d'instrumentation, chacun étant placé sur un rayon fixe dans un ou plusieurs plans (Plans P1 et P2 par exemple) déterminés du moteur et relié par une liaison de communication au peigne suivant afin de former un réseau de peignes sous forme d'un ou plusieurs cercles qui peuvent être reliés ensemble. Le nombre de peignes de ce réseau intégrant chacun plusieurs capteurs de mesure est extensible et reconfigurable pour s'adapter à chaque application. Les peignes sont avantageusement régulièrement répartis sur la circonférence du moteur et une seule unité de traitement maître 44 distante du banc d'essai 46 est suffisante pour gérer le réseau de peignes.

Dans un premier mode de réalisation, représenté à la figure 3, le réseau de peignes (les peignes pouvant être différents en nombre d'orifices comme illustré) est relié à l'unité de traitement maître 44 à travers une liaison de communication unique 50 filaire (par exemple de type Ethernet ou RS485 comme précité) comme illustré présentant un nombre de fils réduit, avantageusement 4 fils, de préférence 2 fils. Cette liaison de communication unique 50 permet également de relier les différents peignes entre eux (via les unités de traitement esclaves 38) afin de transmettre, avantageusement via une seule unité de traitement esclave 38, les données numériques issues des capteurs à l'unité de traitement maître 44.

Dans un second mode de réalisation, représenté à la figure 4, le réseau de peignes est relié à l'unité de traitement maître 44 via une liaison de communication unique sans fil 52 (de type LoRa ou WiFi par exemple). Chacune des unités de traitement esclaves 38 communique avec les unités de traitement esclaves appartenant au même plan via cette liaison de communication unique sans fil 52, de préférence par un système d'émission/réception sans fil 384, avantageusement intégré dans l'unité 38. Une unité de traitement esclave d'un même plan transmettant ensuite à l'unité de traitement maître 44 comportant son propre système d'émission/réception sans fil 440 les données numériques issues des capteurs, lesquelles peuvent à leur tour être adressées au banc d'essai 46 qui les reçoit au travers de son système d'émission/réception 460. Dans ce cas, l'alimentation est fournie par le module de gestion d'énergie 382 qui comporte préférentiellement une source d'énergie intégrée comme une batterie ou par un module de gestion d'énergie agissant aussi comme un récupérateur d'énergie.

Ainsi, selon la configuration de l'invention, un seul peigne à 8 orifices permettra de réaliser 16 mesures = 8* P&T par exemple et un réseau de 20 peignes à 8 orifices permettra de réaliser jusqu'à 320 mesures simultanément = 20*8*P&T.

On notera que s'il a été fait référence précédemment essentiellement à des capteurs P&T (c'est-à-dire associant une sonde de pression et une sonde de température), les types de capteurs intégrés aux peignes d'instrumentation peuvent être utilisés pour toute autre mesure dans un moteur d'aéronef, comme un taux d'humidité, une composition de gaz, etc....

L'invention permet une mise en oeuvre plus facile d'un banc de test pour instrumenter un moteur d'aéronef en P&T du fait que les mesures sont directement converties en numérique au plus proche du point de mesure pour limiter les perturbations analogiques dans un environnement sévère (HT, bruit,..) et que seule une interface électronique est présente du côté du banc de test. En outre, en cas de mesure de pression, la mesure est prise directement au niveau du point de mesure et non ramenée à l'extérieur du moteur évitant toute perte due à des raccords tubulaires tant internes qu'externes.

## Revendications

1. Peigne d'instrumentation pour moteur d'aéronef comportant un tube central (32) d'axe longitudinal sur lequel sont percés un nombre déterminé d'orifices espacés selon cet axe longitudinal et une embase (42) formant une extrémité proximale de ce tube et destinée à être fixée sur une partie de carter du moteur d'aéronef, chaque orifice étant associé à une sonde mécanique de mesure d'un paramètre physique du moteur d'aéronef, chaque sonde mécanique étant associée à une interface électronique de traitement et l'embase intégrant une unité de traitement esclave (38) reliée à chacune des interfaces électroniques de traitement par une liaison de communication numérique (40) apte à recevoir en temps réel des données numériques de mesure correspondant aux paramètres physiques mesurés par les sondes mécaniques de mesure et destinées à être communiquées à une unité de traitement maître (44) par une liaison de communication unique (50, 52), **caractérisé en ce que** les sondes mécaniques et leur interface électronique de traitement sont disposées sur le tube central (32) et espacés les unes des autres suivant l'axe longitudinal du tube central (32).

2. Peigne d'instrumentation selon la revendication 1, **caractérisé en ce que** le paramètre physique est l'un quelconque ou une association des paramètres suivants : une pression, une température, un taux d'humidité ou une composition de gaz.

3. Peigne d'instrumentation selon la revendication 1 ou la revendication 2, **caractérisé en ce que** la liaison de communication unique est une liaison filaire (50) ou sans fil (52).

4. Peigne d'instrumentation selon la revendication 3, **caractérisé en ce que** la liaison filaire est de type Ethernet ou RS485 et la liaison sans fil de type LoRa ou WiFi.

5. Peigne d'instrumentation selon la revendication 1 ou la revendication 2, **caractérisé en ce que** l'unité de traitement esclave (38) comporte un module de gestion d'alimentation (382) adapté pour assurer l'alimentation en énergie des interfaces électroniques de traitement et d'un module de communication (380) supportant la liaison de communication unique (50).

6. Réseau de peignes formé de plusieurs peignes d'instrumentation selon l'une quelconque des revendications 1 à 5 dans lequel les peignes d'instrumentation sont répartis régulièrement sur la circonférence et sur plusieurs plans du moteur d'aéronef.

7. Réseau de peignes selon la revendication 6, **caractérisé en ce que** les unités de traitement esclaves (38) des peignes d'instrumentation d'un même plan sont reliées entre elles une à une pour former un cercle, la liaison de communication unique (50) avec l'unité de traitement maître (44) s'effectuant depuis au plus une unité de traitement esclave (38) déterminée d'un peigne d'instrumentation de chaque plan du réseau de peignes.

8. Réseau de peignes selon la revendication 6, **caractérisé en ce qu'**une unité de traitement esclave (38) d'un peigne d'instrumentation déterminé d'un plan donné est reliée à une unité de traitement esclave (38) d'un peigne d'instrumentation déterminé d'un autre plan.

9. Système de collecte de mesures d'un paramètre physique d'un moteur d'aéronef comprenant :
- au moins un peigne d'instrumentation (30) selon l'une quelconque des revendications 1 à 5 ;
- une unité de traitement maître (44) reliée par une liaison de communication (48) à un banc d'essai (46) ;
ladite unité de traitement maître (44) étant reliée à l'unité de traitement esclave (38) dudit peigne par une liaison de communication unique (50, 52) destinée à alimenter en énergie ladite unité de traitement esclave (38) et à transférer les données issues des interfaces électroniques de traitement.

10. Système selon la revendication 9 dans lequel ladite liaison de communication unique est filaire (50) ou sans fil (52) et la liaison de communication entre l'unité de traitement maître (44) et le banc d'essai (46) est une liaison filaire ou sans fil (48).

11. Moteur d'aéronef comportant au moins un peigne d'instrumentation selon l'une quelconque des revendications 1 à 5 ou un réseau de peignes selon l'une quelconque des revendications 6 à 8.

12. Aéronef comportant un moteur selon la revendication 11.

## Patentansprüche

1. Instrumentenkamm für ein Flugzeugtriebwerk, der ein zentrales Rohr (32) mit Längsachse, in das eine bestimmte Anzahl an Öffnungen gebohrt ist, die entlang dieser Längsachse beabstandet sind, und eine Basis (42) beinhaltet, die ein proximales Ende dieses Rohres bildet und dazu bestimmt ist, an einem Teil des Gehäuses des Flugzeugtriebwerks befestigt zu sein, wobei jeder Öffnung eine mechanische Sonde zum Messen eines physikalischen Parameters des Flugzeugtriebwerks zugeordnet ist, wobei jeder mechanischen Sonde eine elektronische Verarbeitungsschnittstelle zugeordnet ist und die Basis eine Slave-Verarbeitungseinheit (38) integriert, die mit jeder der elektronischen Verarbeitungsschnittstellen durch eine digitale Kommunikationsverbindung (40) verbunden ist, die in der Lage ist, in Echtzeit digitale Messdaten zu empfangen, die den physikalischen Parametern entsprechen, die durch die mechanischen Messsonden gemessen werden und dazu bestimmt sind, an eine Master-Verarbeitungseinheit (44) durch eine einzelne Kommunikationsverbindung (50, 52) kommuniziert zu werden,
**dadurch gekennzeichnet, dass**
die mechanischen Sonden und ihre elektronische Verarbeitungsschnittstelle auf dem zentralen Rohr (32) angeordnet und voneinander entlang der Längsachse des zentralen Rohres (32) beabstandet sind.

2. Instrumentenkamm nach Anspruch 1, **dadurch gekennzeichnet, dass** der physikalische Parameter ein beliebiger oder eine Verbindung der folgenden Parameter ist: ein Druck, eine Temperatur, eine Luftfeuchtigkeit oder eine Gaszusammensetzung.

3. Instrumentenkamm nach Anspruch 1 oder Anspruch 2, **dadurch gekennzeichnet, dass** die einzelne Kommunikationsverbindung eine drahtgebundene (50) oder drahtlose (52) Verbindung ist.

4. Instrumentenkamm nach Anspruch 3, **dadurch gekennzeichnet, dass** die drahtgebundene Verbindung vom Typ Ethernet oder RS485 und die drahtlose Verbindung vom Typ LoRa oder WiFi ist.

5. Instrumentenkamm nach Anspruch 1 oder Anspruch 2, **dadurch gekennzeichnet, dass** die Slave-Verarbeitungseinheit (38) ein Versorgungsverwaltungsmodul (382), das ausgelegt ist, um die Versorgung der elektronischen Verarbeitungsschnittstellen mit Energie sicherzustellen, und ein Kommunikationsmodul (380), das die einzelne Kommunikationsverbindung (50) stützt, beinhaltet.

6. Kammnetzwerk, das aus mehreren Instrumentenkämmen nach einem der Ansprüche 1 bis 5 gebildet ist, in dem die Instrumentenkämme regelmäßig auf dem Umfang und auf mehreren Ebenen des Flugzeugtriebwerks verteilt sind.

7. Kammnetzwerk nach Anspruch 6, **dadurch gekennzeichnet, dass** die Slave-Verarbeitungseinheiten (38) der Instrumentenkämme einer gleichen Ebene der Reihe nach miteinander verbunden sind, um einen Kreis zu bilden, wobei die einzelne Kommunikationsverbindung (50) mit der Master-Verarbeitungseinheit (44) von höchstens einer bestimmten Slave-Verarbeitungseinheit (38) von einem Instrumentenkamm jeder Ebene des Kammnetzwerks aus erfolgt.

8. Kammnetzwerk nach Anspruch 6, **dadurch gekennzeichnet, dass** die Slave-Verarbeitungseinheit (38) eines bestimmten Instrumentenkamms einer gegebenen Ebene mit einer Slave-Verarbeitungseinheit (38) eines bestimmten Instrumentenkamms einer anderen Ebene verbunden ist.

9. System zum Sammeln von Messungen eines physikalischen Parameters eines Flugzeugtriebwerks, umfassend:
- mindestens einen Instrumentenkamm (30) nach einem der Ansprüche 1 bis 5,
- eine Master-Verarbeitungseinheit (44), die durch eine Kommunikationsverbindung (48) mit einem Prüfstand (46) verbunden ist, wobei die Master-Verarbeitungseinheit (44) mit der Slave-Verarbeitungseinheit (38) des Kamms durch eine einzelne Kommunikationsverbindung (50, 52) verbunden ist, die dazu bestimmt ist, die Slave-Verarbeitungseinheit (38) mit Energie zu versorgen und die Daten, die von den elektronischen Verarbeitungsschnittstellen ausgegeben werden, zu übertragen.

10. System nach Anspruch 9, wobei die einzelne Kommunikationsverbindung drahtgebunden (50) oder drahtlos (52) ist und die Kommunikationsverbindung zwischen der Master-Verarbeitungseinheit (44) und dem Prüfstand (46) eine drahtgebundene oder drahtlose (48) Verbindung ist.

11. Flugzeugtriebwerk, das mindestens einen Instrumentenkamm nach einem der Ansprüche 1 bis 5 oder ein Kammnetzwerk nach einem der Ansprüche 6 bis 8 beinhaltet.

12. Flugzeug, das ein Triebwerk nach Anspruch 11 beinhaltet.

## Claims

1. An instrumentation comb for an aircraft engine including a central tube (32) with a longitudinal axis on which a determined number of orifices spaced apart along this longitudinal axis are drilled and a base (42) forming a proximal end of this tube and intended to be fixed on a crankcase portion of the aircraft engine, each orifice being associated with a sensor for measuring a physical parameter of the aircraft engine, each sensor being associated with an processing electronic interface and the base integrating a slave processing unit (38) connected to each of the measuring sensors by a communication link (40) able to receive in real time digital measurement data corresponding to the physical parameters measured by the measuring sensors and intended to be communicated to a master processing unit (44) by a single communication link (50, 52),
**characterized in that** the sensors and their processing electronic interface are placed on the central tube (32) and spaced apart from each other along the longitudinal axis of the central tube (32)

2. The instrumentation comb according to claim 1, **characterized in that** the physical parameter is any one or a combination of the following parameters: pressure, temperature, humidity level or gas composition.

3. The instrumentation comb according to claim 1 or 2, **characterized in that** the single communication link is a wired (50) or wireless (52) link.

4. The instrumentation comb according to claim 3, **characterized in that** the wired link is of the Ethernet or RS485 type and the wireless link of the LoRa or WiFi type.

5. The instrumentation comb according to claim 1 or 2, **characterized in that** the slave processing unit (38) includes a power management module (382) adapted to ensure the power supply of the measuring sensors and of a communication module (380) supporting the single communication link (50).

6. An array of combs formed of several instrumentation combs according to any one of claims 1 to 5 wherein the instrumentation combs are evenly distributed over the circumference and over several planes of the aircraft engine.

7. The array of combs according to claim 6, **characterized in that** the slave processing units (38) of the instrumentation combs of the same plane are connected together one by one to form a circle, the single communication link (50) with the master processing unit (44) being achieved from at most one determined slave processing unit (38) of an instrumentation comb of each plane of the array of combs.

8. The array of combs according to claim 6, **characterized in that** a slave processing unit (38) of a determined instrumentation comb of a given plane is connected to a slave processing unit (38) of a determined instrumentation comb of another plane.

9. A system for collecting measurements of a physical parameter of an aircraft engine comprising:
- at least one instrumentation comb (30) according to any one of claims 1 to 5;
- a master processing unit (44) connected by a communication link (48) to a test bench (46);
said master processing unit (44) being connected to the slave processing unit (38) of said comb by a single communication link (50, 52) intended to supply energy to said slave processing unit (38) and to transfer the data coming from the sensors (36-1 to 36-8).

10. The system according to claim 9 wherein said single communication link is wired (50) or wireless (52) and the communication link between the master processing unit (44) and the test bench (46) is a wired or wireless link (48).

11. An aircraft engine including at least an instrumentation comb according to any one of claims 1 to 5 or an array of combs according to any one of claims 6 to 8.

12. The aircraft including an engine according to claim 11.
